# EUROPEAN PATENT APPLICATION

(11) **EP 3 546 916 A1**
(43) Date of publication of application: **02.10.2019**
(21) Application number: 18425020.7
(22) Date of filing: 26.03.2018
(51) Int. Cl.: G01N 1/22, B01L 3/00

(54) **TWO-STAGE CAP FOR AMBIENT AIR SAMPLING VIALS**

(71) Applicant: Spaziani Rolando S.R.L., 00048 Nettuno (RM) (IT)
(72) Inventor: Spaziani, Giancarlo, 00048 Nettuno (RM) (IT); Spaziani, Mario, 00048 Nettuno (RM) (IT)

(57) **Abstract**

Cap for vials which include an open holder having an opening mouth which includes coupling means suitable for engaging with capping means, which includes in combination a ring nut (2) including a shoulder against popping out of membrane filter means arranged inside it; first coupling means (21) complementary to the coupling means (13) of the opening mouth of the open holder, and second coupling means (23) suitable for engaging with capping means, and capping means (3) including coupling means (31) complementary to the second coupling means (23) of the ring nut (2), so that a vial capped therewith turns out to be suitable for ambient air samplings.

## Description

The instant invention relates to a cap for vials.

More particularly, the instant invention relates to a cap for vials for air samplings.

As is known, the exigency subsists for carrying out analyses of ambient air for a series of important objects, such as for instance the control of atmospheric pollution and the safeguard of comfort in workplaces.

Ambient air sampling vials include a glass holder-forming portion shaped as a small jar, having an opening mouth, and a plastic screw closing cap.

Taking an ambient air sample is carried out through a membrane filter, for instance a 100 micrometer mesh filter, arranged in a ring nut screwed and closed on the mouth of the holder. Air penetrates in the holder through the membrane filter by diffusion phenomenon.

Once the air sample taken, the ring nut with the membrane filter is unscrewed and a closing cap is screwed thereon in the place thereof.

Known art, therefore, for a sampling operation envisages the use of a kit of two separate pieces, wherewhich at the moment of taking an air sample it is necessary to unthread the ring nut with the membrane filter and only afterwards to proceed with capping the holder (and thereafter bringing the vial to the analysis laboratory). So, a shortcoming arises in an inevitable dispersion at the moment of the ring nut with the membrane-filter.

Moreover, in the practice of use the two loose pieces are subject to go lost.

It is the object of the instant invention to provide means that allow ambient air samplings to be made overcoming the mentioned shortcomings.

Such an object is reached, according to the teaching of the instant invention, with the contrivance of endowing the ring nut with further coupling means suitable for being engaged by the closing cap. In this way the two separate pieces of the kit in use in prior art become constitutive elements of a single two-stage cap.

Therefore, it is the subject-matter of the instant invention a cap for vials, which vials include an open holder having an opening mouth which includes coupling means suitable for engaging with capping means as set forth in appended Claim 1.

It includes in combination:
- ring nut-forming annular means including shoulder means against popping out of membrane filter means arranged inside them; first coupling means complementary to said coupling means of said opening mouth of said open holder, and second coupling means suitable for engaging with capping means, and
- capping means including coupling means complementary to said second coupling means of said ring nut-forming annular means.

It is envisaged that said coupling means are screw threads.

It is envisaged that said coupling means are pressure snap clamps.

It is envisaged that said coupling means said coupling means are flanged clutches.

Moreover, a problem subsists with prior art vials with the sealing of the taken air sample against polluting agents. The sample is subject to infiltrations in the transport from the collection site to the analysis laboratory. Indeed, the closure does not guarantee the seal of the vial against air-air contaminations.

It is the object of the instant invention to also solve this problem.

Therefore, the instant invention envisages the contrivance of providing preceptive grooves suitable for receiving seal gaskets, particularly 'O-ring' seal toroidal rings.

Therefore, it is the subject-matter of the instant invention a cap for vials as set forth wherein said ring nut-forming annular means include first groove-forming means suitable for receiving closure seal gasket means between the annular means themselves and said capping means, according to appended Claim 5.

It is also the subject-matter of the instant invention a cap for vials as set forth, wherein said ring nut-forming annular means include second groove-forming means suitable for receiving seating holding gasket means for membrane filter means according to appended Claim 6.

Really prior art envisages the use of membrane filters only weakly stopped with flat gaskets without a seat in the ring nut, which realize an insufficient sealing.

In consideration of the fact that the inventive cap is intended to the use on a glass holder for ambient air samples, it is particularly envisaged that it, in the two constitutive elements thereof, is manufactured in plastic. Particularly, it is envisaged that the plastic is Teflon; polytetrafluoroethylene (PTFE); polyethylene-terephtalate (PET). Indeed, such materials guarantee that the cap satisfies two fundamental requisites: (1) that it turns out to be chemically inert; (2) that it realizes a matching with the glass of the holder as regards thermal expansion coefficients, so that the cap does not have to break the glass.

The instant invention will be fully understood based on the detailed disclosure, only given as a matter of example, absolutely not of restriction, referring to the annexed drawings, wherein:
- FIGURE 1 is a diametrical section view of an inventive cap in assembled state;
- FIGURE 2 is a front view of an inventive cap in assembled state.

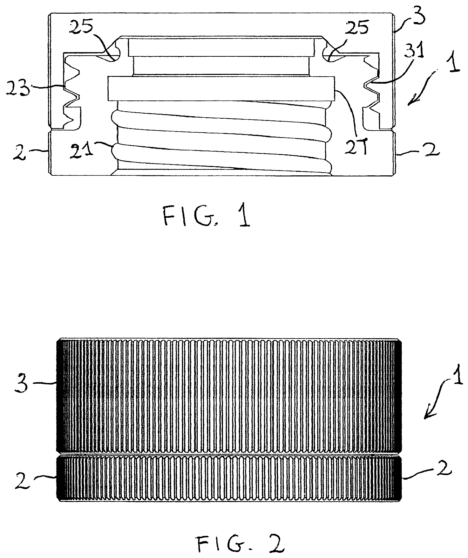

Referring to FIGURE 1, the instant invention is a cap 1 for vials, which vials include an open holder, generally of glass, having an opening mouth including a male outer screw thread as coupling means, suitable for engaging with an inner complementary screw thread of a cap.

Inventive cap 1 includes in combination:
- a ring nut 2 including shoulder means against popping out of membrane filter means arranged inside it; a female inner screw thread 21. forming first coupling means complementary to the male outer screw thread of the opening mouth of said opening said open holder, and a male outer screw thread 23 forming second coupling means, whilst ring nut 2 itself forms an open element;
- a closed cap 3 forming capping means including an inner screw thread 31 forming coupling means complementary to male outer screw thread forming second coupling means 23 of ring nut 2.

Screw threads have been disclosed as coupling means, but these ones may also be for instance pressure snap clamps or flanged clutches.

The preferred embodiment envisages screw couplings for the fact that these ones allow the safest closing, so making gaskets to work at the best on both the vial side ('O-ring' of the membrane filter) and the cap side, realizing the inventive object at the best.

It is envisaged that ring nut 2 includes a first groove 25 suitable for receiving a closure seal gasket, particularly an 'O-ring' between the ring nut itself and closing cap 3.

It is envisaged that ring nut 2 includes a second groove 27 suitable for receiving a seating holding gasket for a membrane filter arranged in ring nut 2 itself.

It is particularly envisaged that the inventive cap, in the two constitutive elements thereof, is manufactured in plastic. Particularly, it is envisaged that the plastic is Teflon; polytetrafluoroethylene (PTFE); polyethylene-terephtalate (PET).

The instant invention has been disclosed and illustrated referring to specific embodiments thereof, but it is to be expressly understood that modifications, additions or omissions can be made, without so departing from the protection scope thereof, which only remains defined by the appended claims.

## Claims

1. Cap (1) for vials, which vials include an open holder having an opening mouth which includes coupling means suitable for engaging with capping means, which includes in combination:
- ring nut-forming annular means (2) including shoulder means against popping out of membrane filter means arranged inside them; first coupling means (21) complementary to said coupling means of said opening mouth of said open holder, and second coupling means (23) suitable for engaging with capping means, and
- capping means (3) including coupling means (31) complementary to said second coupling means (23) of said ring nut-forming annular means (2),
so that a vial capped therewith turns out to be suitable for ambient air samplings.

2. Cap for vials according to Claim 1, wherein said coupling means are screw threads.

3. Cap for vials according to Claim 1, wherein said coupling means are pressure snap clamps.

4. Cap for vials according to Claim 1, wherein said coupling means are flanged clutches.

5. Cap for vials according to Claim 1, wherein said ring nut-forming annular means (2) include first groove-forming means (25) suitable for receiving closure seal gasket means between the annular means themselves (2) and said capping means (3).

6. Cap according to Claim 5, wherein said first groove-forming means (25) are suitable for receiving an 'O-ring'.

7. Cap for vials according to Claim 1, wherein said ring nut-forming annular means (2) include second groove-forming means (27) suitable for receiving seating holding gasket means for membrane filter means.

8. Cap according to Claim 7, wherein said second groove-forming means (27) are suitable for receiving an 'O-ring'.

9. Cap for vials according to Claim 1, wherein said ring nut and said closed cap are manufactured in plastic.

10. Cap for vials according to Claim 9, wherein said plastic is selected among Teflon; polytetrafluoroethylene (PTFE); polyethylene-terephtalate (PET).
